# EUROPEAN PATENT SPECIFICATION

(11) **EP 1 223 375 B1**
(45) Date of publication and mention of the grant of the patent: **21.12.2005**
(21) Application number: 01200039.4
(22) Date of filing: 08.01.2001
(51) Int. Cl.: F16L 21/03, F23J 13/04

(54) **Sealing ring for modular ducts and modular duct incorporating said ring**
Dichtungsring für modulare Leitungen und modulare Leitung mit einem derartigen Dichtungsring
Collier d'étanchéité pour conduits modulaires et conduit modulaire incorporant un tel collier

(43) Date of publication of application: 17.07.2002
(73) Proprietor: Neoterm International Trading Inc., Tortola (VG)
(72) Inventor: Vigano, Umberto Mario, 20030 Giussano (MI) (IT)
(74) Representative: Bottero, Claudio

(56) References cited:
- EP-A- 0 386 516
- EP-A- 0 607 623
- EP-A- 0 622 577
- EP-A- 0 644 365

## Description

### Field of the invention

The present invention relates to a sealing ring for modular ducts and to a modular duct for transporting aeriform substances incorporating said sealing ring.

### State of the art

As known, in the field of modular ducts for transporting aeriform substances, one of the most difficult problems has always been that of accomplishing adequate sealing properties against the leak of said substances at pressures and temperatures higher than ambient pressures and temperatures (generally up to 10000 Pa above the atmospheric pressure and up to 300°C).

It is also known that the difficulty of simultaneously obtaining these desired features essentially arises from the fact that the behaviour of the sealing rings used for this purpose in the prior art is affected in a completely opposite way by pressure and temperature.

In order to obtain the desired sealing action at high pressures, in fact, the so-called "bending-type" sealing rings are usually used, which are provided with flexible lamellae radially extending towards an inner portion of the ring and having a reduced thickness (0.2-0.5 mm) and a length comprised between 1 and 3 mm. These flexible lamellae bend at high pressures and contribute to increase the sealing surface between the sealing rings and the duct in a way proportional to the pressure increase.

In order to obtain the desired seal to aeriform substances at high temperatures, on the other hand, it is a common practice to use the so-called "compression-type" sealing rings, which are provided with substantially rounded ribs radially extending towards an inner portion of the ring and having a higher thickness (0.8-1.5 mm) and lower length (1-1.2 mm) with respect to the lamellae of the "bending-type" sealing rings. These ribs are capable of ensuring a suitable adhesion of the sealing ring to the duct wall thanks to the fact that they expand as the temperature of the aeriform substances increases.

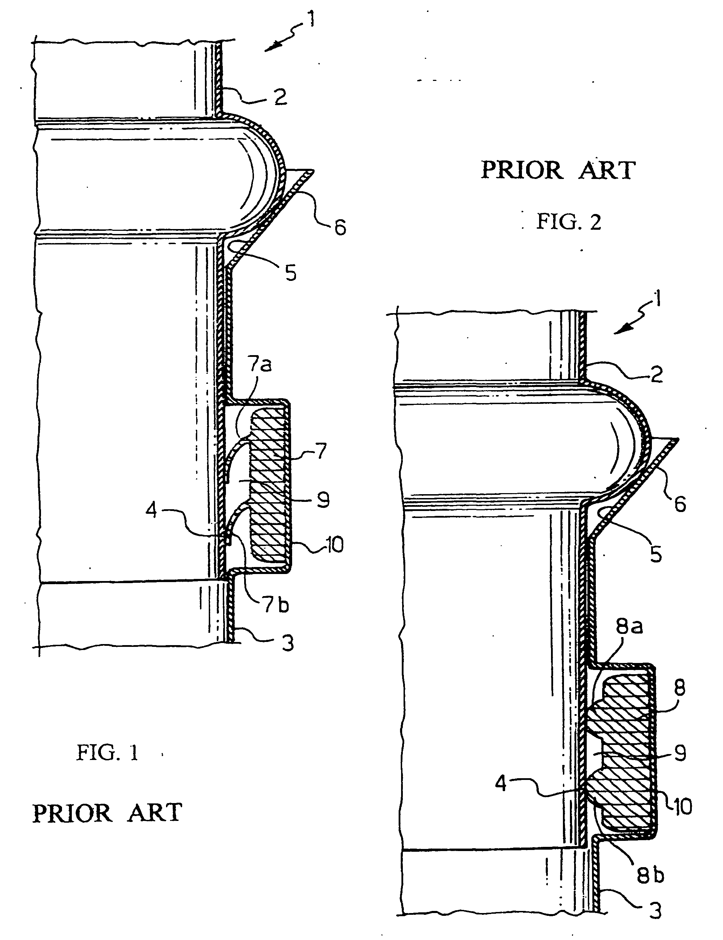

Figures 1 and 2 schematically show in a longitudinal section two modular ducts, for example flues intended to the scavenging of combustion smokes from a boiler, wherein the sealing action is respectively carried out by the above-mentioned "bending-type" and "compression-type" sealing rings of the prior art. Each modular duct, generally indicated at 1, comprises a plurality of structurally independent tubular sections connected in series with one another. Figures 1 and 2 show two of these sections, indicated at 2 and 3, which are reciprocally connected in series after the insertion of an end portion 4 of the tubular section 2 into a seat 5 formed at an end portion 6 of an adjacent tubular section 3.

In the modular duct 1 shown in figure 1, the desired sealing action against smoke leaks is ensured by a sealing ring 7 of the so-called "bending-type", radially provided with flexible lamellae 7a, 7b. More in particular, the sealing ring 7 is housed in a respective annular housing seat 9 formed at the end portion 6 of the second tubular section 3.

Although the performances of the "bending-type" sealing rings 7 at high operating pressures are satisfactory, nevertheless they exhibit some disadvantages which have not been solved yet.

In the first place, after a certain operating time, the "bending-type" sealing rings 7 are particularly prone to hardening phenomena which in turn cause a flexibility decrease of the lamellae 7a, 7b, with a consequent decrease of the sealing effectiveness.

In the second place, the above-mentioned flexibility decrease of the lamellae 7a, 7b may imply a loss of adherence between adjacent tubular sections 2, 3 of the duct 1, thus causing - in the case of flues - undesired phenomena of upwelling of the condensate by capillarity.

Finally, the "bending-type" sealing ring 7 may come out from its housing seat 9 due to the frictions generated between the ring and the end portion 4 of the tubular section 2 during the inserting operation of said section into the adjacent tubular section 3.

In the modular duct 1 shown in figure 2, the desired sealing action against smoke leaks is ensured by a sealing ring 8 of the so-called "compression-type". The latter is radially provided with two rounded ribs 8a, 8b having a thickness higher than that of the lamellae 7a, 7b of the "bending-type" sealing ring 7. The sealing ring 8 is also housed in an annular housing seat 9 formed at the end portion 6 of the second tubular section 3.

Although the rounded shape of the ribs 8a, 8b allows to obtain a suitable gas seal at high temperatures thanks to the thermal expansion of the same, the sealing level obtained by the "compression-type" sealing rings 8, however, is not adequate in all those cases in which the rings are used in ducts wherein there is also a high gas pressure.

The "compression-type" sealing rings 8, in fact, do not show any appreciable increase of the sealing section under the action of the pressure exerted by gases, with the possible onset of leaks or phenomena of upwelling of the condensate by capillarity due to an insufficient sealing action between the tubular sections 2 and 3.

European patent application EP-A-0 622 577 discloses a sealing ring for modular ducts for transporting aeriform substances, in which the ducts comprise a plurality of structurally independent tubular sections reciprocally connected in series. According to EP-A-0 622 577, the ring comprises an annular element provided with a plurality of flexible lips having a tapered cross-section starting from a base portion having a predetermined thickness, the lips radially extending towards an inner portion of the sealing ring.

### Summary of the invention

The technical problem underlying the present invention is therefore that of providing a sealing ring for modular ducts for transporting aeriform substances having structural and functional features capable to overcome the disadvantages and limits mentioned hereinabove with reference to the cited prior art.

According to the invention, the above technical problem is solved by a sealing ring for modular ducts for transporting aeriform substances as defined in attached claim 1.

According to the invention, it is advantageously possible to obtain suitable sealing properties against the leak of aeriform substances both at operating pressures and temperatures higher than ambient pressures and temperatures - for example up to 10000 Pa above the atmospheric pressure and up to 300°C - thanks to a particular combination of structural features of the lips radially extending towards the inner portion of the ring.

The Applicant has in fact surprisingly found that this advantageous technical effect may be obtained by imparting to the above lips a tapered cross-section which allows the lips to have both a suitable flexibility along a transversal direction, so as to increase the sealing surface between the sealing ring and the duct proportionally to a pressure increase, and features capable to impart a suitable expandability to the lips along a transversal direction, so as to increase the sealing surface between the sealing ring and the duct proportionally to a temperature increase.

In the present description and in the following claims, the terms "flexibility" and "expandability" along a transversal direction are used to indicate the flexibility and expandability of the lips along a direction substantially parallel to the insertion direction of the tubular sections of the modular duct between which the sealing ring is mounted.

Thanks to the above-mentioned structural features, the lips of the sealing ring are thus advantageously capable of both bending in an elastically reversible manner as a function of the operating pressure, and of expanding - also in an elastically reversible manner - as a function of the operating temperature, thus increasing in both cases the sealing surface between the sealing ring and the outer walls of the tubular sections of the modular duct.

The sealing ring according to the invention accomplishes also the following advantages.

In the first place, the sealing ring of the invention can be interposed between adjacent tubular sections of the modular duct and, as such, can be easily inspected from the outside in order to verify its ageing without disassembling the modular duct in which the ring is mounted.

Once the ring has been assembled, in fact, the radially outer annular element of the sealing ring is arranged in the radially outer part of the modular duct so as to make possible to easily carrying out the required controls and the preventive maintenance.

Furthermore, by suitably programming the latter, it is advantageously possible to duly replace the two annular elements sealing ring, thus minimising the risks of leaks related to ageing phenomena of the material.

In the second place, the sealing ring of the invention can be maintained in position reducing substantially to zero the risks of an accidental movement of the ring from its assembly position, risks to which the known sealing rings constituted by a single annular element may undergo.

Thanks to the presence of an annular seat housing the free end of one of the tubular sections, in fact, the sealing ring of the invention may be easily mounted astride said free end, that is, in such a position that the stresses exerted on the sealing ring during the connection in series of the tubular sections firmly hold the sealing ring in the proper assembly position.

In other words, and in contrast to what occurs with the sealing rings of the known type, constituted by a single annular element, the frictional stresses developing between the two annular elements sealing ring of the invention and the tubular section being inserted exerts a positive action in maintaining the sealing ring in the proper position.According to the invention, the lips of the sealing ring have a cross-section tapered towards their free end, which is preferably rounded.

Thanks to such tapering, and particularly to the tapering of the upper lip of the ring, the sealing ring of the invention sensibly reduces the risks of an accidental movement of the sealing ring from its assembly position, risks to which the sealing rings of the prior art may undergo.

More particularly, the cross-section of the above-mentioned lips is gradually decreasing towards the free end starting from a base portion of each lip having a predetermined thickness, preferably comprised between 0.7 and 2.5 and, still more preferably, between 0.8 and 2.2 mm.

In the present description and in the following claims, the expression "base portion of the lips" is used to indicate the portion of the lips measured in the cross-section of the ring at a vertical line passing through a junction point between the upper face of the upper lip of the radially inner annular element and the junction wall joining the radially inner and radially outer annular elements of the sealing ring.

In the present description and in the following claims, the expression "junction point" is used to indicate the point or the restricted zone at which there is the transition between the upper face of the upper lip of the radially inner annular element and the junction wall joining the radially inner and radially outer annular elements of the sealing ring.

In the present description and in the following claims, the expression "vertical line" is used to indicate a line substantially perpendicular to the lying plane of the sealing ring.

Preferably, the length of the lips of the sealing ring, measured between said base portion and the free end of the lips, is comprised between 0.7 and 1.7 mm and, still more preferably, between 0.8 and 1.5 mm.

According to a preferred embodiment, the lips of the sealing ring are substantially triangle-shaped, and have a different shape from one another. More in particular, the upper lip has:
i) a base portion of greater width, and
ii) a lower length
with respect to those of the lower lip, which facilitates the reciprocal insertion of the tubular sections of the modular duct during the assembling step.

In the present description and in the following claims, the designations of "upper" and "lower" shall be attributed to the sealing elements (face, lip, etc.) with reference to the position taken by the ring once assembled in the modular duct.

In the present description and in the following claims, the terms "width" and "length" of the lips of the sealing ring, or of parts thereof, are used to indicate the size of the same measured along the above-mentioned vertical line passing through the junction point between the upper face of the upper lip of the radially inner annular element of the ring and the junction wall joining the radially inner and radially outer annular elements of the sealing ring and, respectively, along a line perpendicular to this vertical line, parallel to the sealing ring lying plane.

According to a preferred embodiment of the sealing ring, the junction wall of the radially inner and radially outer annular elements of such sealing ring comprises a first portion extending from the first annular element of the sealing ring and inclined at a first predetermined angle (α) with respect to the upper face of the upper lip.

Preferably, the above angle (α) is comprised between 140° and 180° and, still more preferably, between 155° and 170°.

Said inclination of the first portion of the junction wall advantageously favours both the reciprocal insertion of the tubular sections intended to form the modular duct and the correct arrangement of the lips of the sealing ring, so as to impart an effective seal against leaks of aeriform substances.

Preferably, the annular junction wall of the sealing ring further comprises a second portion extending from the second annular element and inclined at a second predetermined angle (β) with respect to the first portion.

Preferably, said second angle (β) is comprised between 125° and 145° and, still more preferably, between 130° and 140°.

For the purposes of the invention, the above first and second portions of the junction wall are connected to one another in a suitable way, and they can be both substantially curvilinear and substantially rectilinear.

The sealing ring of the invention is preferably integrally made of a suitable elastomeric material, such as for example silicone, silicone rubbers, fluorinated rubbers, and the like.

In a further aspect thereof, the invention relates to a modular duct for transporting aeriform substances as defined in attached claim 7.

According to a preferred embodiment of the modular duct of the invention, the above-mentioned tubular sections are reciprocally connected in series by inserting an end portion of a first tubular section into a seat formed in an end portion of a second adjacent tubular section, while the above-mentioned sealing ring is arranged astride the free end of the second tubular section.

Preferably, the radially inner and radially outer annular elements of said sealing rings are housed into respective seats formed at respectively inner and outer opposite sides of said end portion of the second tubular section of the modular duct.

According to a preferred embodiment, the annular junction wall of the sealing ring arranged astride the free end of the second tubular section is interposed between said free end and a radially outer annular abutment peripherally formed in an initial length of the end portion of the first tubular section.

Preferably, the modular duct further comprises a tightening clamp coaxially mounted in a reversible way around said duct at the sealing ring interposed between adjacent tubular sections.

Advantageously, the tightening clamp has the double function of joining the tubular sections around which the tightening clamp is mounted, and of radially compressing the sealing ring, thus further increasing the sealing action of the same.

### Brief description of the drawings

Further features, peculiarities and advantages of the present invention will appear more clearly from the following detailed description of some preferred embodiments of a sealing ring according to the invention, made by way of non limiting indication with reference to the attached drawings, in which equal reference numerals refer to equal or corresponding parts.
- Figure 1 shows a longitudinal section view of a portion of a modular duct according to the prior art, comprising a conventional "bending-type" sealing ring;
- Figure 2 shows a longitudinal section view of a portion of a modular duct according to the prior art, comprising a conventional "compression-type" sealing ring;
- Figure 3 shows a perspective view in partial cross-section of an embodiment of the sealing ring of the invention;
- Figure 4 shows an enlarged view of the cross-section of the sealing ring of figure 3;
- Figure 5 shows a longitudinal section view of a portion of a modular duct according to the invention, wherein the sealing ring of figure 3 is shown in assembly position;
- Figure 6 shows a perspective view in partial cross-section of the modular duct of figure 5.

### Detailed description of some preferred embodiments

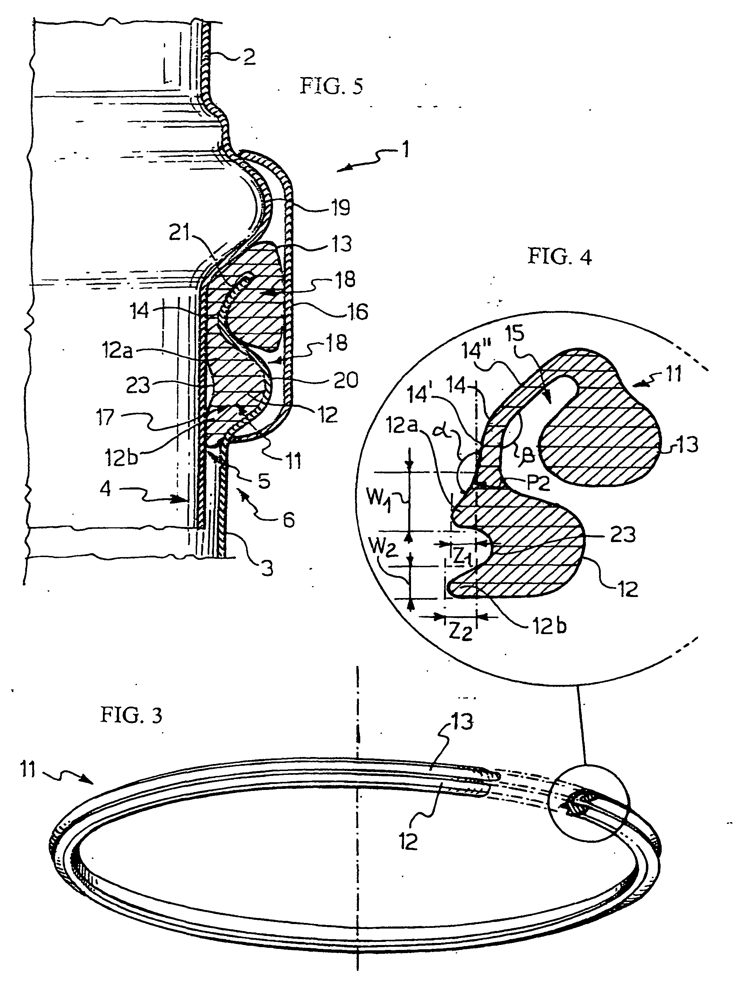

With reference to figures 3-6, a preferred embodiment of a sealing ring and of a modular duct according to the invention for transporting aeriform substances shall be now described.

In the following description and in said figures, the elements of the sealing ring or of the modular duct which are structurally or functionally equivalent to those previously illustrated with reference to figures 1-2 shall be referred to by the same reference numerals, and shall not be further described.

In figures 3-6, reference numeral 11 indicates a sealing ring intended to be mounted in a modular duct 1 which constitutes, for example, a flue for scavenging the combustion smokes from a boiler.

According to a preferred embodiment, shown in figures 3-6, the sealing ring 11 comprises a first radially inner annular element 12 and a second radially outer annular element 13, reciprocally connected by a junction wall 14 at which there is defined an annular housing seat 15 of the free end of one of the tubular sections of the duct 1, for example the free end 6 of the tubular section 3 (figures 4 and 5).

The annular elements 12 and 13 are preferably integrally made of a suitable elastomeric material, for example silicone, suitably formed and treated by means of conventional operations known *per se.*

The annular element 12 is provided with a plurality of superposed lips - in the illustrated example in number of two - respectively upper 12a and lower 12b.

The lips 12a, 12b are radially extending towards an inner portion of the sealing ring 11, and they are advantageously provided with suitable properties of flexibility along a transversal direction.

According to the invention, the lips 12a, 12b have a tapered cross-section gradually decreasing towards their free end starting from respective base portions having a thickness w₁, w₂ (in the following description, for shortness: base thicknesses) respectively equal to 2.2 mm and 1 mm.

The lips 12a, 12b respectively have a length z₁, z₂ measured between the base portion and the free end of the lip, preferably equal to 1 mm and 1.2 mm.

Experimental tests have shown that the optimum values of the base thicknesses w₁, w₂ and of the lengths z₁, z₂ of the lips 12a, 12b depend upon the value of the maximum diameter of the sealing ring 11, and that they can be empirically determined by a man skilled in the art.

In the present description, the above-mentioned preferred values of the base thicknesses w₁, w₂ and of the lengths z₁, z₂ of the lips 12a, 12b have been determined with reference to sealing rings 11 having a maximum diameter comprised between 300 and 400 mm, as those which are usually used in the field of flues.

According to the shown preferred embodiment, the lips 12a, 12b have different base thicknesses and lengths. In particular, the lip 12a has a greater base thickness and a smaller length with respect to the base thickness and the length of the lip 12b.

Thus, for example, the values of the base thickness w₁ and of the length z₁ of the upper lip 12a are preferably comprised between 1.5 mm and 2.5 mm (w₁) and between 0.7 mm and 1.2 mm (z₁) and, still more preferably, between 1.6 mm and 2.2 mm (w₁) and between 0.7 mm and 1 mm (z₁), whereas the values of the base thickness w₂ and of the length z₂ of the lower lip 12b are preferably comprised between 0.7 mm and 1.2 mm (w₂) and between 0.8 mm and 1.4 mm (z₂) and, still more preferably, between 0.8 mm and 1.0 mm (w₂) and between 0.9 mm and 1.2 mm (z₂).

Such a configuration of the lips 12a, 12b advantageously allows to reach the maximum adhesion surface between the sealing ring 11 and the duct 1 in operating conditions, ensuring at the same time, in said conditions, suitable properties of elasticity and resistance of the sealing ring 11.

Preferably, the lips 12a, 12b of the sealing ring 11 are connected to one another by means of a substantially curvilinear wall 23 which, when the sealing ring 11 is at rest, has a bending radius preferably comprised between 0.6 mm and 0.9 mm and, still more preferably, between 0.7 mm and 0.8 mm.

The sealing ring 11 is preferably integrally made of a suitable elastomeric material, for example silicone, by using conventional forming operations, for example moulding, followed by a stabilisation annealing thermal treatment so as to maintain the mechanical properties, such as for example hardness, elongation and tensile strength, unaltered in time.

Thanks to the peculiar features of the lips 12a and 12b, the sealing ring 11 achieves the above-mentioned improved sealing performances against the leaks of smokes sensibly reducing the risks of an accidental movement of the sealing ring 11 during the coupling step of the sections 2, 3 of the modular duct 1.

In operating conditions of the modular duct 1, the lips 12a, 12b can both bend along a transversal direction in response to pressure increases of the combustion smokes within the modular duct 1, and expand along a transversal direction in response to possible temperature increases of the smokes, thus achieving the desired sealing properties both at high pressures and high temperatures.

The second annular element 13 has a preferably rounded free end and, still more preferably, shaped as a bulb.

According to the preferred embodiment shown in figures 3 and 4, the junction wall 14 connecting the first annular element 12 to the second annular element 13 comprises two portions 14', 14'' extending in sequence starting from a junction point P₂ with the upper lip 12a of sealing ring 11.

Said junction point P₂ may be considered a point of inflection if the upper face of the lip 12a and the first portion 14' of the wall 14 are substantially curvilinear and have opposite concavities with respect to one another, whereas it may be considered a cusp if the upper face of the lip 12a and the first portion 14' of the wall 14 are substantially rectilinear.

In the embodiment shown, the portion 14' is inclined at an angle α having a value equal to about 160° with respect to the upper face of the lip 12a, and it forms an angle β having a value equal to about 130° with the second portion 14'' of the junction wall 14.

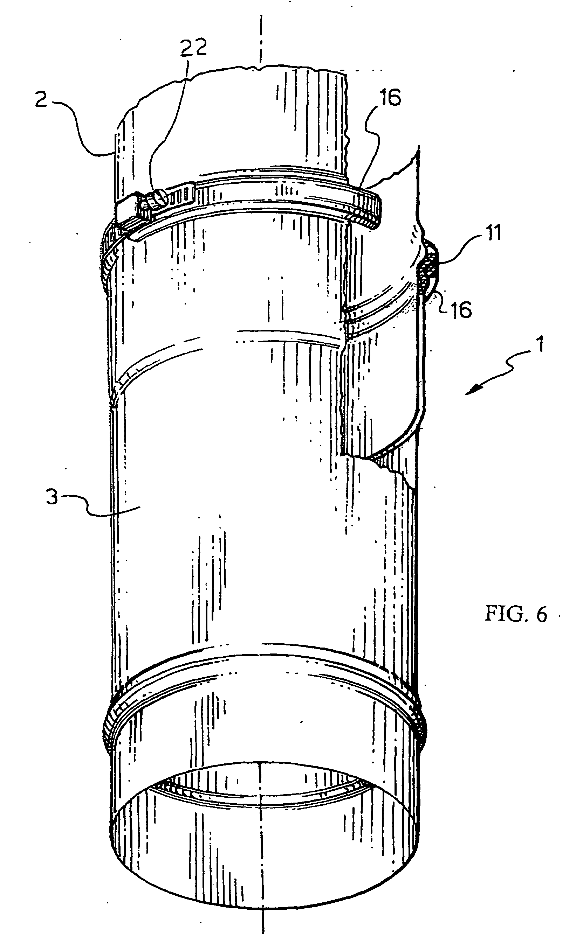

Figures 5 and 6 show a preferred embodiment of the modular duct 1 for transporting aeriform substances according to the invention.

The duct 1 comprises a plurality of adjacent tubular sections 2, 3, in the following description indicated with the terms of first and second tubular section for convenience, between which the above-described sealing ring 11 is interposed.

The first tubular section 2 and the second tubular section 3 of the modular duct 1 are structurally independent and are connected in series to one another by inserting an end portion 4 of the first tubular section 2 into a seat 5 formed in an end portion 6 of the second adjacent tubular section 3.

In the embodiment shown in figures 5 and 6, the end portion 6 of the second tubular section 3 is provided with a radially outer annular abutment 20 peripherally formed at an end length of said portion 6. The annular abutment 20 is connected to a radially inner annular abutment 21 peripherally formed at the free end of the end portion 6.

A radially outer annular abutment 19 is peripherally formed at an initial portion of the end portion 4 of the first tubular section 2, on which abutment 19 the junction wall 14 of the sealing ring 11 is intended to abut, as it will appear more clearly in the following description.

In the embodiment shown in figures 5 and 6, the sealing ring 11 is intended to be arranged astride the free end 6 of the second tubular section 3 so that the radially inner 12 and the radially outer 13 annular elements of the sealing ring 11 are housed into respective seats 17, 18 formed at respectively inner and outer opposite sides of the end portion 6 of the second tubular section 3.

Advantageously, said housing seats 17, 18 are respectively defined in the annular abutments 20 and 21 so that, after the assembly, the annular junction wall 14 of the sealing ring 11 is interposed and compressed in a "sandwich" fashion between the abutments 19 and 21 (figure 7).

In the preferred embodiment shown in figures 5 and 6, the modular duct 1 also comprises a tightening clamp 16 coaxially mounted in a removable way around the modular duct 1 at the sealing ring 11 mounted between the adjacent tubular sections 2, 3. The tightening clamp 16 is blocked in position around the modular duct 1 in a way known *per se*, for example by means of a conventional screw closing device 22.

When the tubular sections 2, 3 of the duct 1 are reciprocally assembled, the sealing ring 11 has the configuration schematically shown in figures 5 and 6. Said assembly is carried out as follows.

In an initial step, the sealing ring 11 is arranged astride the end portion 6 of the second tubular section 3 which is housed in the seat 15 formed in the sealing ring 11. In this way, the radially inner annular element 12 and the radially outer annular element 13 are arranged in the seats 17, 18 formed in the end portion 6 of the tubular section 3.

In a second step, the first tubular section 2 is inserted into the second tubular section 3 for a portion corresponding to the stroke allowed by the annular abutment 19, that is, until said abutment 19 abuts against the junction wall 14 of the sealing ring 11, in turn arranged against the radially inner annular abutment 21 of the tubular section 3.

Advantageously, the insertion of the tubular section 2 into the tubular section 3 is facilitated both by the shape of the elastically deformable lips 12a, 12b, and in particular by the value of the angle α formed by the upper lip 12a with the portion 14' of the wall 14, and by the flexibility features in the transversal direction of the lips.

Advantageously, moreover, the stresses generated during said insertion (acting in vertical direction and from top downwards with reference to figures 5 and 6) exert a positive action on the sealing ring 11 holding the same in its assembly position astride the end portion 6 of the modular section 3.

In a third step, the tightening clamp 16 is coaxially mounted around the modular duct 1 at the sealing ring 11, and thus blocked in position by means of the closing device 22.

Since the radially outer annular element 13 of the sealing ring 11 is arranged outwardly of the tubular section 3, the ageing conditions of the sealing ring may be easily checked during periodical maintenance operations by simply removing the clamp 16, or even in a direct way if said clamp is not provided.

The lips 12a, 12b are capable - in the operating conditions of the modular duct 1 - of both bending along a transversal direction in case of a pressure increase of the combustion smokes within the modular duct 1, and expanding along a transversal direction in case of possible temperature increases of the smokes, thus obtaining the desired sealing characteristics both at high pressures and high temperatures.

Clearly, a skilled man in the art may introduce changes and variants to the invention described hereinabove in order to satisfy specific and contingent application requirements, changes and variants which anyhow fall within the scope of protection as defined by the following claims.

## Claims

1. Sealing ring (11) for modular ducts (1) for transporting aeriform substances, said ducts (1) comprising a plurality of structurally independent tubular sections (2, 3) reciprocally connected in series, the ring (11) comprising:
a) a first radially inner annular element (12) provided with a plurality of flexible lips (12a, 12b) having a tapered cross-section starting from a base portion having a predetermined thickness (w₁, w₂), said lips (12a, 12b) being radially extending towards an inner portion of said sealing ring (11);
**characterised in that** the ring (11) further comprises:
b) a second radially outer annular element (13) connected to said first annular element (12) by means of a junction wall (14);
c) an annular seat (15) for housing the free end of one of said tubular sections (2, 3) defined between said first (12) and second (13) annular elements of the sealing ring (11).

2. Sealing ring (11) according to claim 1, wherein the thickness (w₁, w₂) of the base portion of said lips (12a, 12b) is comprised between 0.7 and 2.5 mm.

3. Sealing ring (11) according to claim 1, wherein the length (z₁, z₂) of said lips (12a, 12b) measured between said base portion and the free end of said lips (12a, 12b) is comprised between 0.7 and 1.7 mm.

4. Sealing ring (11) according to claim 1, wherein said junction wall (14) comprises a first portion (14') extending from said first annular element (12) and inclined at a first predetermined angle (α) with respect to the upper face of the upper lip (12a) of said plurality of lips (12a, 12b).

5. Sealing ring (11) according to claim 1, wherein said sealing ring (11) is integrally made of a suitable elastomeric material.

6. Sealing ring (11) according to claim 1, comprising an upper lip (12a) and at least one lower lip (12b), wherein said upper lip (12a) has a base thickness higher and a length lower with respect to the base thickness and the length of said at least one lower lip (12b).

7. Modular duct (1) for transporting aeriform substances, comprising a plurality of structurally independent tubular sections (2, 3) reciprocally connected in series, **characterised in that** the duct (1) comprises a plurality of sealing rings (11) according to any one of the previous claims, interposed between adjacent tubular sections (2, 3) of said duct (1).

8. Modular duct (1) according to claim 7, wherein said tubular sections (2, 3) are reciprocally connected in series by inserting an end portion (4) of a first tubular section (2) into a housing seat (5) formed in an end portion (6) of a second adjacent tubular section (3) and wherein said sealing ring (11) is arranged astride the free end of said second tubular section (3).

9. Modular duct (1) according to claim 8, wherein the first (12) and the second (13) annular elements of said sealing rings (11) are housed into respective housing seats (17, 18) formed at respectively inner and outer opposite sides of said end portion (6) of said second tubular section (3) of the modular duct (1).

10. Modular duct (1) according to claim 8, wherein said junction wall (14) of the sealing ring (11) is interposed between the free end of said second tubular section (3) and a radially outer annular abutment (19) peripherally formed in an initial length of said end portion (4) of the first tubular section (2).

11. Modular duct (1) according to claim 7, further comprising a tightening clamp (16) coaxially mounted around said duct (1) at said sealing ring (11).

## Patentansprüche

1. Dichtungsring (11) für modulare Leitungen (1) zum Transportieren gasförmiger Substanzen, wobei die Leitungen (1) eine Mehrzahl von strukturell unabhängigen Rohrabschnitten (2, 3) aufweisen, die miteinander in Reihe verbunden sind, wobei der Ring (11) aufweist:
a) ein erstes in Radialrichtung inneres ringförmiges Element (12), das mit einer Mehrzahl von biegsamen Lippen (12a, 12b) ausgestattet ist, die einen verjüngten Querschnitt von einem Basisabschnitt mit einer vorbestimmten Dicke (w₁, w₂) her besitzen, wobei die Lippen (12a, 12b) sich in Radialrichtung in Richtung eines inneren Abschnitts des Dichtungsrings (11) erstrecken;
**dadurch gekennzeichnet, dass** der Ring (11) außerdem aufweist:
b) ein zweites in Radialrichtung äußeres ringförmiges Element (13), das mit dem ersten ringförmigen Element (12) mittels einer Verbindungswand (14) verbunden ist;
c) einen ringförmigen Sitz (15) zum Aufnehmen des freien Endes eines der Rohrabschnitte (2, 3), der zwischen dem ersten (12) und zweiten (13) ringförmigen Element des Dichtungsrings (11) definiert ist.

2. Dichtungsring (11) nach Anspruch 1, wobei die Dicke (w₁, w₂) des Basisabschnitts der Lippen (12a, 12b) zwischen 0.7 und 2.5 mm beträgt.

3. Dichtungsring (11) nach Anspruch 1, wobei die Länge (z₁, z₂) der Lippen (12a, 12b), gemessen zwischen dem Basisabschnitt und dem freien Ende der Lippen (12a, 12b), zwischen 0.7 und 1.7 mm beträgt.

4. Dichtungsring (11) nach Anspruch 1, wobei die Verbindungswand (14) einen ersten Abschnitt (14') aufweist, der sich vom ersten ringförmigen Element (12) aus erstreckt und unter einem ersten vorbestimmten Winkel (α) bezüglich der oberen Fläche der oberen Lippe (12a) von der Mehrzahl der Lippen (12a, 12b) geneigt ist.

5. Dichtungsring (11) nach Anspruch 1, wobei der Dichtungsring (11) integral aus einem geeigneten elastomeren Material besteht.

6. Dichtungsring (11) nach Anspruch 1, mit einer oberen Lippe (12a) und wenigstens einer unteren Lippe (12b), wobei die obere Lippe (12a) eine Basisdicke besitzt, die größer ist als die Basisdicke der wenigstens einen unteren Lippe (12b), und eine Länge, die geringer ist als die Länge der wenigstens einen unteren Lippe (12b).

7. Modulare Leitung (1) zum Transportieren von gasförmigen Substanzen, mit einer Mehrzahl von strukturell unabhängigen Rohrabschnitten (2, 3), die miteinander in Reihe verbunden sind, **dadurch gekennzeichnet, dass** die Leitung (1) eine Mehrzahl von Dichtungsringen (11) gemäß einem der vorangehenden Ansprüche aufweist, die zwischen aneinandergrenzenden Rohrabschnitten (2, 3) der Leitung (1) angeordnet sind.

8. Modulare Leitung (1) nach Anspruch 7, wobei die Rohrabschnitte (2, 3) miteinander durch Einführen eines Endabschnitts (4) eines ersten Rohrabschnitts (2) in einen Aufnahmesitz (5), der in einem Endabschnitt (6) eines zweiten angrenzenden Rohrabschnitts (3) ausgebildet ist, in Reihe verbunden sind, und wobei der Dichtungsring (11) rittlings auf dem freien Ende (13) des zweiten Rohrabschnitts (3) angeordnet ist.

9. Modulare Leitung (1) nach Anspruch 8, wobei das erste (12) und das zweite (13) ringförmige Element der Dichtungsringe (11) in entsprechenden Aufnahmesitzen (17, 18) aufgenommen sind, die an entsprechenden inneren und äußeren gegenüberliegenden Seiten des Endabschnitts (6) des zweiten Rohrabschnitts (3) der modularen Leitung (1) ausgebildet sind.

10. Modulare Leitung (1) nach Anspruch 8, wobei die Verbindungswand (14) des Dichtungsrings (11) zwischen dem freien Ende des zweiten Rohrabschnitts (3) und einer in Radialrichtung äußeren ringförmigen Schulter (19), die umlaufend in einer ursprünglichen Länge des Endabschnitts (4) des ersten Rohrabschnitts (2) ausgebildet ist, angeordnet ist.

11. Modulare Leitung (1) nach Anspruch 7, außerdem mit einer Spannklemme (16), die koaxial um die Leitung (1) am Dichtungsring (11) befestigt ist.

## Revendications

1. Collier d'étanchéité (11) pour conduits modulaires (1) destinés au transport de substances aériformes, lesdits conduits (1) comprenant une pluralité de sections tubulaires structurellement indépendantes (2, 3) réciproquement reliées en série, le collier (11) comprenant :
a) un premier élément annulaire interne dans un sens radial (12) muni d'une pluralité de lèvres flexibles (12a, 12b) ayant une coupe transversale conique partant d'une partie de base ayant une épaisseur prédéterminée (w₁, w₂), lesdites lèvres (12a, 12b) s'étendant dans un sens radial vers une partie interne dudit collier d'étanchéité (11) ;
**caractérisé en ce que** ledit collier (11) comprend en outre :
b) un second élément annulaire interne dans un sens radial (13) relié au dit premier élément annulaire (12) au moyen d'une paroi de jonction (14) ;
c) un siège annulaire (15) destiné à loger l'extrémité libre d'une desdites sections tubulaires (2, 3), défini entre ledit premier (12) et ledit second (13) élément annulaire du collier d'étanchéité (11).

2. Collier d'étanchéité (11) selon la revendication 1, dans lequel l'épaisseur (w₁, w₂) de la partie de base desdites lèvres (12a, 12b) est comprise entre 0,7 et 2,5 mm.

3. Collier d'étanchéité (11) selon la revendication 1, dans lequel la longueur (z₁, z₂) desdites lèvres (12a, 12b) mesurée entre ladite partie de base et l'extrémité libre desdites lèvres (12a, 12b) est comprise entre 0,7 et 1,7 mm.

4. Collier d'étanchéité (11) selon la revendication 1, dans lequel ladite paroi de jonction (14) comprend une première partie (14') s'étendant à partir dudit premier élément annulaire (12) et inclinée selon un premier angle prédéterminé (α) par rapport à la face supérieure de la lèvre supérieure (12a) de ladite pluralité de lèvres (12a, 12b).

5. Collier d'étanchéité (11) selon la revendication 1, dans lequel ledit collier d'étanchéité (11) est fait intégralement d'un matériau élastomère adapté.

6. Collier d'étanchéité (11) selon la revendication 1, comprenant une lèvre supérieure (12a) et au moins une lèvre inférieure (12b), dans lequel ladite lèvre supérieure (12a) a une épaisseur de base supérieure et une longueur inférieure à l'épaisseur de base et à la longueur de ladite au moins une lèvre inférieure (12b).

7. Conduit modulaire (1) destiné au transport de substances aériformes, comprenant une pluralité de sections tubulaires structurellement indépendantes (2, 3) réciproquement reliées en série,
**caractérisé en ce que** le conduit (1) comprend une pluralité de colliers d'étanchéité (11) selon l'une quelconque des revendications précédentes, interposés entre sections tubulaires adjacentes (2, 3) dudit conduit (1).

8. Conduit modulaire (1) selon la revendication 7, dans lequel lesdites sections tubulaires (2, 3) sont réciproquement reliées en série par insertion d'une partie d'extrémité (4) d'une première section tubulaire (2) dans un siège de logement (5) formé dans une partie d'extrémité (6) d'une seconde section tubulaire adjacente (3) et dans lequel ledit collier d'étanchéité (11) est agencé à cheval sur l'extrémité libre de ladite seconde section tubulaire (3).

9. Conduit modulaire (1) selon la revendication 8, dans lequel le premier (12) et le second (13) élément annulaire desdits colliers d'étanchéité (11) sont logés dans des sièges de logement respectifs (17, 18) formés au niveau de côtés opposés respectivement internes et externes de ladite partie d'extrémité (6) de ladite seconde section tubulaire (3) du conduit modulaire (1).

10. Conduit modulaire (1) selon la revendication 8, dans lequel ladite paroi de jonction (14) du collier d'étanchéité (11) est interposée entre l'extrémité libre de ladite seconde section tubulaire (3) et une butée annulaire externe dans un sens radial (19) formée de manière périphérique dans une longueur initiale de ladite partie d'extrémité (4) de la première section tubulaire (2).

11. Conduit modulaire (1) selon la revendication 7, comprenant en outre une pince de serrage (16) montée de manière coaxiale autour dudit conduit (1) au niveau dudit collier d'étanchéité (11).
